# DEMANDE DE BREVET EUROPEEN

(11) **EP 1 500 749 A1**
(43) Date de publication de la demande: **26.01.2005**
(21) Numéro de dépôt: 04102535.4
(22) Date de dépôt: 04.06.2004
(51) Int. Cl.: E02B 8/02

(54) **Dispositif de dégrillage / tamisage d'un liquide chargé en corps volumineux, et procédé de dégrillage / tamisage d'un liquide mettant en oeuvre ce dispositif**

(30) Priorité: 25.07.2003 FR 0309136
(71) Demandeur: Kaltchev, Roumen, 73000 Montagnole (FR)
(72) Inventeur: Kaltchev, Roumen, 73000 Montagnole (FR)
(74) Mandataire: Vuillermoz, Bruno

(57) **Abrégé**

Dispositif de dégrillage / tamisage de liquide véhiculant des corps volumineux (40) au sein d'un canal comportant :
- un écran filtrant composé d'au moins deux barres (2) disposées à une certaine distance l'une de l'autre, et s'étendant au-delà de la hauteur du canal;
- un râteau (7) mobile le long de l'écran filtrant et situé derrière celui-ci, côté aval, ledit râteau étant muni de dents (8), destinées à pénétrer entre les barres (2) de l'écran filtrant;
- au moins un rail de guidage (12), pour le râteau de nettoyage (7);
- des moyens de récupération des déchets, situé devant l'écran filtrant, côté amont;
- des moyens d'animation, permettant d'une part, d'assurer le déplacement du râteau (7) le long des barres (2), et d'autre part, de réaliser une variation de la position dudit râteau (7) par rapport à la surface de l'écran filtrant, de façon à ce que les dents (8) du râteau puissent pénétrer plus ou moins entre les barres (2) de l'écran filtrant.

## Description

### DOMAINE TECHNIQUE

L'invention concerne un dispositif de dégrillage / tamisage. Le dispositif selon l'invention peut être utilisé pour séparer les déchets volumineux véhiculés par un liquide. Il est conçu pour être installé dans un canal rectangulaire, mais sa construction peut être adaptée à d'autres types de conduites.

L'appellation courante de ce type de dispositif est dégrilleur fin.

Le procédé et le dispositif décrits sont particulièrement destinés au dégrillage des eaux résiduaires.

### ART ANTERIEUR

Il existe sur le marché une multitude de dispositifs de dégrillage / tamisage. Ils utilisent différents types d'écrans filtrants, à travers lesquels le liquide est filtré. La mise en oeuvre de l'écran filtrant est également assez variable. Certains dispositifs sont dépourvus de tout mécanisme mouvant, d'autres sont, au contraire, assez sophistiqués sur le plan mécanique. Il est pratiquement impossible de décrire dans la présente description toutes les constructions existantes et leurs spécificités. La classification sommaire ci-dessous permet uniquement de situer le dispositif selon l'invention parmi la multitude de dispositifs existants.

Les dispositifs existants peuvent être classés sommairement selon les critères suivants (pour les constructions les plus courantes) :

### Maille de filtration :

La maille de filtration peut varier de quelques dizaines de microns (tamis à toile) à plusieurs centimètres (grilles à barre).

### Type d'écran filtrant :

L'écran filtrant peut être une toile tissée, une tôle perforée, une rangée de barres plus ou moins rapprochées ou un écran filtrant composé de plusieurs éléments différents.

### Construction et mise en oeuvre :

Le dispositif peut être installé dans un canal (tamisage sans perte de charge), ou conçu en tant qu'appareil indépendant alimenté par gravité ou par pompage. Il existe aussi des dispositifs qui se montent sur une tuyauterie fermée.

### Mode de nettoyage :

L'écran filtrant peut être nettoyé mécaniquement ou bien par lavage sous pression, ou encore une combinaison des deux.

### Mode d'évacuation des déchets :

L'évacuation des déchets constitue l'un des problèmes clef de ce type de dispositifs. Le problème est relativement facile à résoudre sur les appareils « indépendants » qui peuvent être alimentés par pompage ou, plus généralement, placés en hauteur pour permettre la récupération des déchets par gravité vers un niveau inférieur. Il devient par contre plus difficile lorsqu'il s'agit de dispositifs installés à l'intérieur d'un canal. Dans ce cas l'évacuation des déchets se fait le plus souvent selon l'une des quatre façons suivantes :
1. L'écran filtrant est nettoyé par une vis d'Archimède qui remonte et éventuellement compacte les déchets en même temps. Dans ce cas la vis doit remonter selon un certain angle par rapport à l'horizontale (elle n'est pratiquement jamais verticale). Cela rallonge considérablement la vis et limite l'utilisation de ce type de dispositifs aux canaux peu profonds - en général moins de 3 m.
2. L'écran filtrant fait remonter les déchets par déplacements successifs de certaines parties de l'écran (le cas de la « Step Screen »). Dans ce cas aussi le dispositif est fortement incliné, ce qui limite la profondeur du canal dans lequel ce type de dispositifs est susceptible d'être installé.
3. L'écran filtrant avec les déchets fixés dessus remonte, les déchets sont séparés, après quoi ledit écran redescend dans le canal. Le plus souvent il s'agit d'un écran filtrant conçu comme un transporteur à bande. La partie chargée en déchets remonte et sa place dans le liquide à filtrer est prise par une autre partie « propre », ce qui assure la continuité de la filtration pendant que la partie chargée en déchets de l'écran filtrant est nettoyée. L'inconvénient majeur de ce type de dispositifs est le risque de « perte » de déchets qui ne sont pas séparés de l'écran filtrant et qui se retrouvent de nouveau dans le liquide en aval du dispositif.
4. Les déchets sont repris en partie basse de l'écran filtrant par un «râteau » situé du côté amont de l'écran. Ce râteau les fait glisser vers le haut pour les séparer de l'écran. Cette technique est utilisée parfois pour des écrans filtrants perforés, mais dans la grande majorité des cas il s'agit d'écrans filtrants à barres. Ainsi les déchets sont retenus sur les barres et le liquide s'écoule entre les barres. Au moment du nettoyage les dents du râteau pénètrent entre les barres du côté amont de l'écran vers le fond du canal. Arrivées en haut, les dents ressortent de la rangée de barres pour déposer les déchets et éviter que ces derniers ne soient « redescendus » dans le canal lors de la descente successive du râteau. Ce type de grilles est assez répandu et présente plusieurs avantages. La construction est simple et robuste et l'écran filtrant peut être pratiquement vertical. Il est donc facile à utiliser pour des canaux profonds sans que la construction du dispositif ne devienne trop lourde et sans occuper une place excessive le long du canal. L'inconvénient majeur de ce type de dégrilleurs est la maille de filtration, qui reste relativement élevée - rarement moins de 10 mm. Le problème est d'ordre mécanique. D'un côté, en partie supérieure, les dents du râteau doivent sortir des fentes formées par les barres de l'écran filtrant, redescendre le long de l'écran et re-pénétrer entre les barres en partie basse, c'est à dire en général plusieurs mètres plus bas. De l'autre côté, les conditions d'utilisation sont souvent assez éprouvantes pour le matériel. Par conséquent, il est difficile de maintenir dans le temps un degré de précision suffisant pour permettre une maille de filtration trop fine et inférieur auxdits 10 mm. En effet, la diminution de la distance entre les barres de l'écran filtrant entraînerait des problèmes de guidage du râteau et des frottements au moment de la pénétration des griffes entre les barres, d'où une diminution de la fiabilité et de la robustesse du matériel.

### BREVE DESCRIPTION DE L'INVENTION

Le dispositif selon l'invention est du même type que le dernier dispositif décrit ci-dessus (paragraphe 4). Néanmoins, la conception originale de l'écran filtrant et du râteau de nettoyage permet d'éviter les problèmes d'ordre mécanique mentionnés, et de diminuer considérablement la maille de filtration.

Le dégrilleur comporte un écran filtrant composé de barres tendues entre deux supports et un râteau de nettoyage situé en aval de l'écran. Pour nettoyer l'écran filtrant ce râteau coulisse le long dudit écran pour pousser les déchets vers le haut. Arrivées en haut, les dents du râteau s'avancent sans ressortir de l'écran pour déposer les déchets sur un peigne fixe situé du côté amont de l'écran filtrant. Une fois les déchets déposés sur le peigne, les dents du râteau reculent et pénètrent entre les barres de l'écran (sans toutefois en ressortir), coulissent le long de l'écran jusqu'au fond du canal et se remettent en position d'attente d'un nouveau cycle de nettoyage.

La manière dont l'invention peut être réalisée et les avantages qui en découlent, ressortiront mieux des exemples de réalisation qui suivent, donnés à titre indicatif et non limitatif, à l'appui des figures annexées.

### BREVE DESCRIPTION DES FIGURES

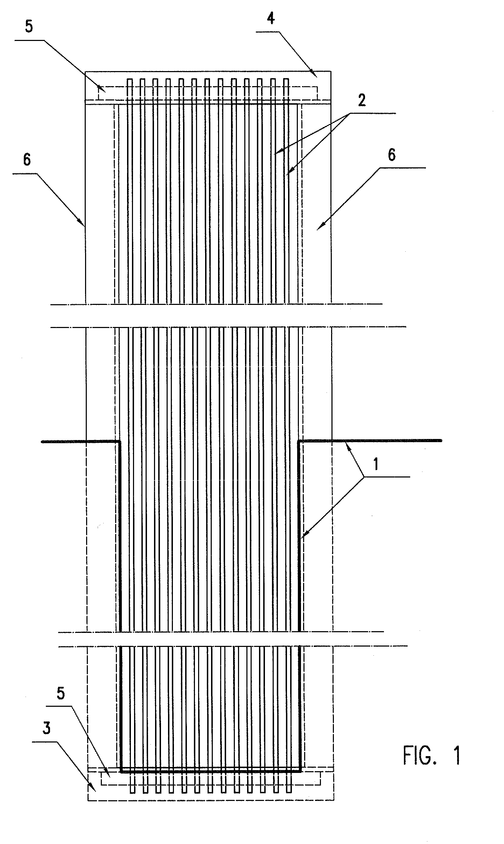

La figure 1 est une vue schématique illustrant le canal dans lequel le dispositif selon l'invention est installé muni de l'écran filtrant.

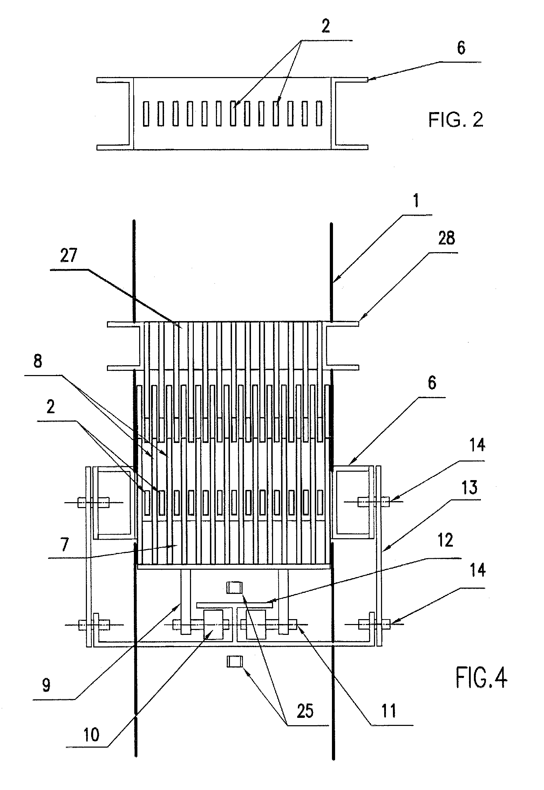

La figure 2 montre une représentation schématique en section horizontale de l'écran filtrant et de son cadre support.

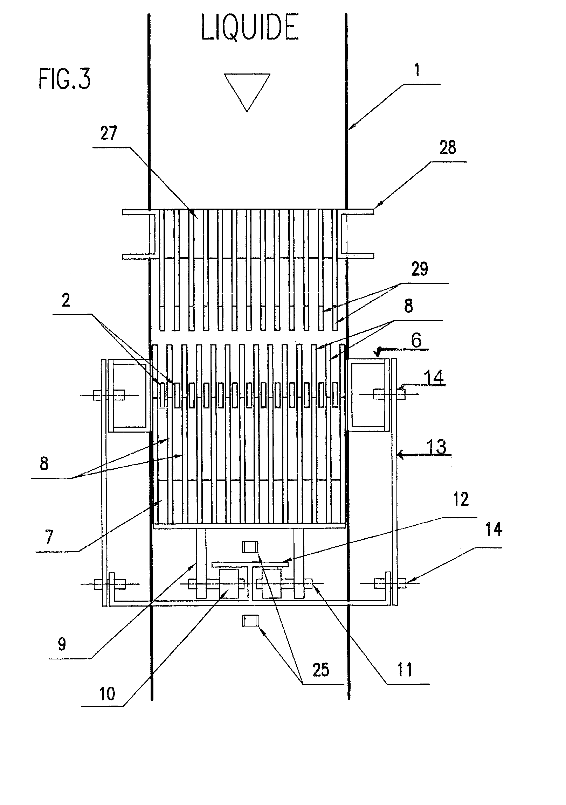

La figure 3 est une représentation schématique en section horizontale du dispositif de l'invention, dans laquelle le râteau de nettoyage est en position « arrêt ».
La figure 4 est une vue analogue à la figure 3, dans laquelle le râteau de nettoyage est avancé et dépose les déchets sur le peigne de nettoyage.
La figure 5 est une représentation schématique en section verticale du dispositif selon l'invention, dans laquelle le râteau de nettoyage est en position « arrêt ».
La figure 6 est une vue analogue à la figure 5, dans laquelle le râteau de nettoyage a remonté les déchets en position haute.
La figure 7 est une représentation schématique en section verticale du dispositif selon l'invention, dans laquelle le râteau de nettoyage dépose les déchets sur le peigne de nettoyage.
La figure 8 est une vue analogue à la figure 7, dans laquelle le râteau de nettoyage a déposé les déchets sur le peigne de nettoyage.
La figure 9 est une vue analogue aux figures 6 et 7, dans laquelle le râteau de nettoyage est en retrait avec les dents à l'intérieur de la rangée de barres de l'écran filtrant et redescend en position basse.
La figure 10 est une vue analogue à la figure 9, dans laquelle le râteau de nettoyage est en position basse, ses dents étant toujours en retrait à l'intérieur de la rangée de barres de l'écran filtrant, juste avant que le râteau ne s'avance pour se retrouver dans la position illustrée sur la figure 5.
Les figures de 11 à 16 sont des vues analogues aux figures 5 à 10, et visent à illustrer une variante du dispositif selon l'invention, selon la même séquence.
Les figures 17 à 20 sont des vues analogues aux figures 5 à 10, et visent à illustrer une seconde variante du dispositif selon l'invention.

### DESCRIPTION DETAILLEE DE L'INVENTION

Le dispositif selon l'invention (appelé par la suite « le dégrilleur ») est destiné à être installé dans un canal (1), dans lequel coule un liquide, et notamment de l'eau, véhiculant des corps volumineux (les déchets à éliminer).

Selon une première caractéristique, le dégrilleur comporte un écran filtrant composé de barres (2) disposées parallèlement deux à deux en rangée à une certaine distance l'une de l'autre. Les barres (2) sont tendues ou disposées entre deux poutres (3) et (4). La poutre (3) est fixée au fond du canal (1). La poutre (4) est située au-dessus du canal, sensiblement à la verticale par rapport à la poutre (3). Les deux poutres (3) et (4) sont reliées entre elles par des poteaux (6), de façon à former un cadre. Les barres (2) traversent chacune des deux poutres (3) et (4) par des fentes (non représentées) découpées dans lesdites poutres, et sont bloquées à ce niveau au moyen de barres de blocage (5). La rigidité du cadre formé par les poutres (3) et (4) et les poteaux (6) permet de tendre les barres (2) de façon à ce qu'elles restent parfaitement rectilignes.

Le dispositif de l'invention comprend un râteau de nettoyage (7) de l'écran filtrant. Celui-ci est situé derrière ledit écran, côté aval par rapport au sens d'écoulement du liquide. Les dents (8), dont est muni ledit râteau, sont orientées selon un sens opposé au sens d'écoulement du liquide. Elles présentent une épaisseur inférieure à la distance séparant deux barres adjacentes (2). Les dents (8) sont disposées de façon à ce que chacune d'entre elles soit en face d'une fente définie par deux barres adjacentes (2). Ainsi les dents (8) du râteau (7) pénètrent entre les barres (2) et peuvent coulisser tout le long de l'écran filtrant en restant toujours entre les barres. En position « arrêt » l'extrémité libre des dents (8) dépasse de la rangée de barres (2) selon une certaine distance vers le côté amont de l'écran filtrant.

Le râteau de nettoyage (7) est fixé sur un chariot (9) équipé de roulettes ou galets (10), reliés audit chariot au moyen d'axes (11). Les galets (10) sont destinés à se déplacer le long d'un rail de guidage (12). Ainsi le chariot (9) est-il susceptible de coulisser le long du rail (12). Celui-ci est relié aux poteaux (6) par l'intermédiaire de bras (13) et d'axes d'articulation (14). Les bras (13) et axes (14) permettent au rail (12) de s'approcher ou de s'éloigner de l'écran filtrant, tout en restant parallèle audit écran.

Ce mouvement du rail (12) est assuré au moyen d'un motoréducteur (15). Ce dernier est monté sur un support (16) et est relié au rail (12) par l'intermédiaire d'un pignon (17), d'une chaîne (18) et d'un bras (19). Le poids de l'ensemble constitué par le rail (12) et le chariot (9) est équilibré par un contrepoids (20). Ainsi, la distance entre le rail (12) et l'écran filtrant peut être contrôlée par la position du contrepoids par l'intermédiaire des détecteurs de proximité (21).

Le chariot (9) coulisse le long du rail (12) par l'intermédiaire d'un motoréducteur (22) entraînant une chaîne (25) solidarisée au chariot (9), et bouclée entre deux pignons (23) et (24). Un détecteur de proximité (26), comptant les rotations du pignon (23), permet de contrôler la position du chariot (9) sur ledit rail (12).

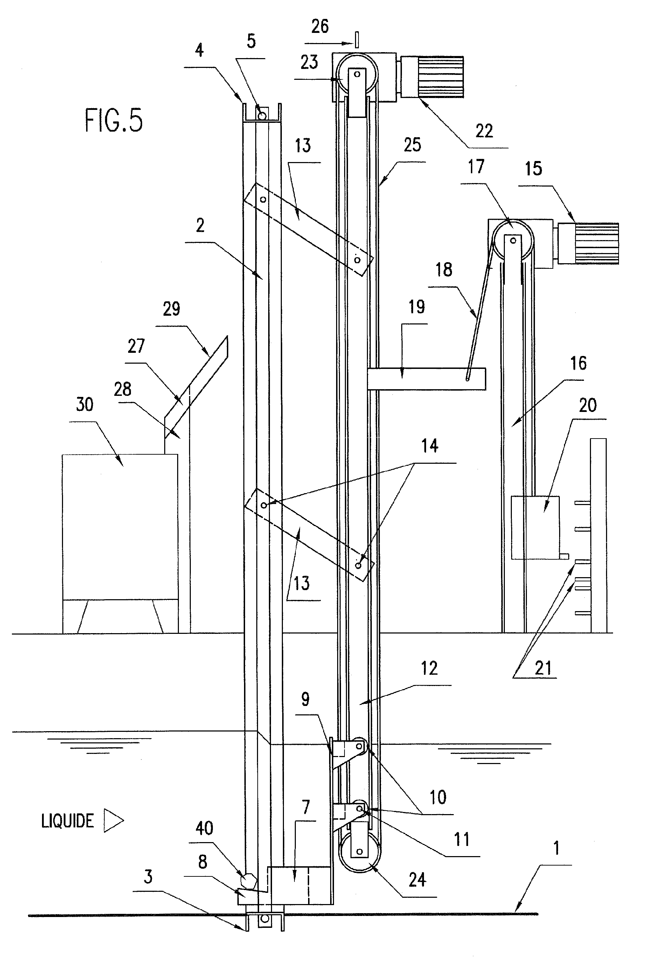

Le dispositif de l'invention comporte également un peigne de nettoyage (27) du râteau (7). Celui-ci est fixé sur un support (28) situé au-dessus du canal (1), du côté amont de l'écran filtrant par rapport au sens d'écoulement du liquide. Le peigne de nettoyage (27) a généralement une construction analogue à celle du râteau (7). Chacune des dents (29) dont il est muni, se trouve en face d'une barre (2), et présente sensiblement la même épaisseur que ladite barre. De cette façon les dents (8) du râteau (7) sont susceptibles de pénétrer entre les dents (29) du peigne (27) comme montré sur la figure 4.

### Le dispositif selon l'invention fonctionne de la manière suivante :

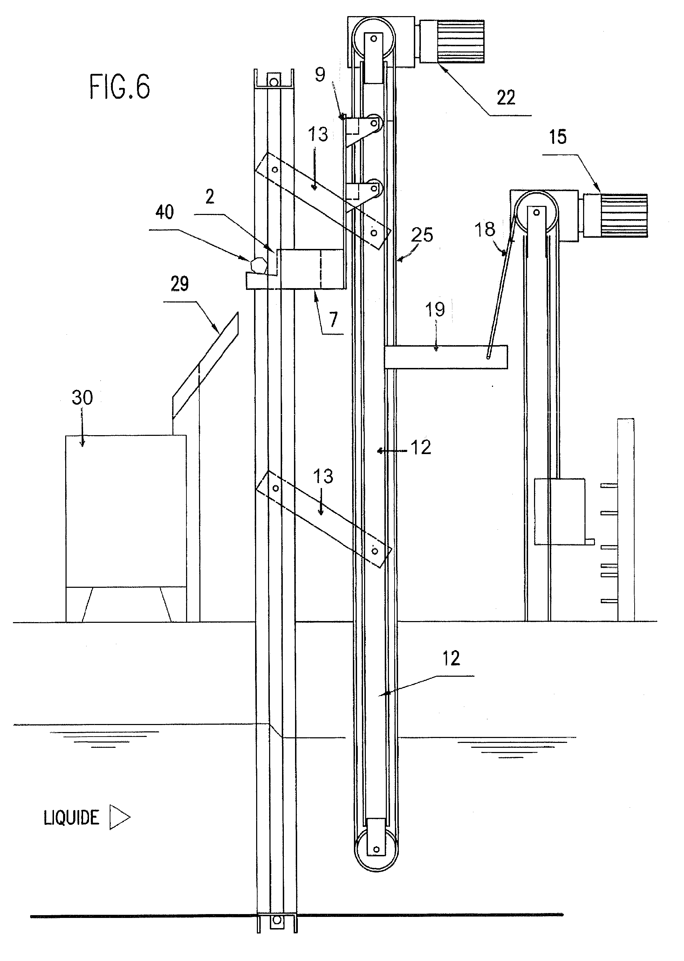

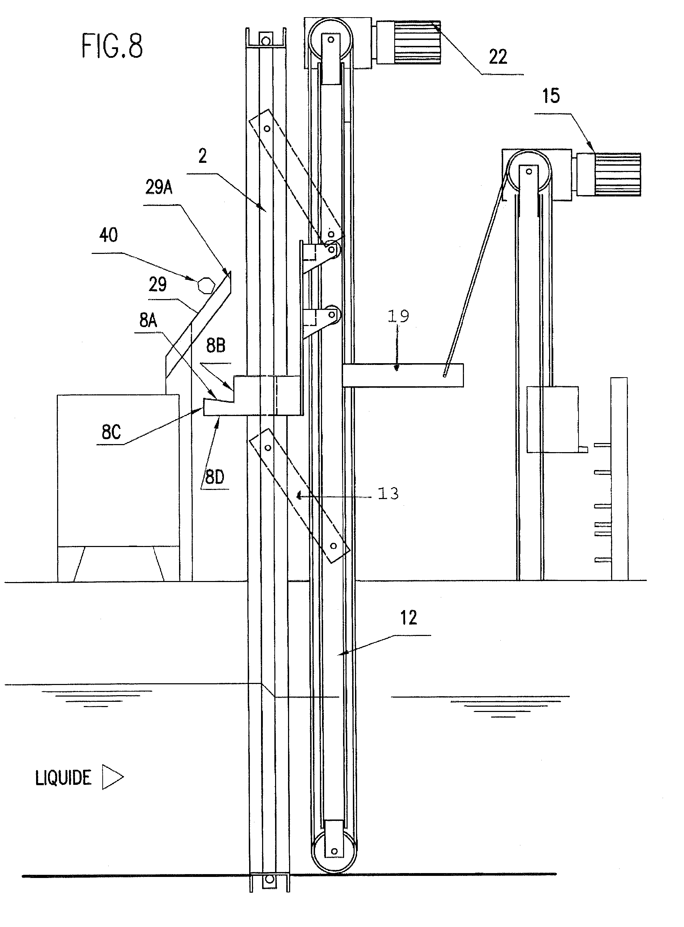

En position « arrêt » (figure 5, le chariot (9) est en position basse et les dents (8) du râteau (7) dépassent de l'écran filtrant du côté amont. Lorsqu'un nettoyage de l'écran est nécessaire, le motoréducteur (22) est actionné, et fait coulisser le chariot (9), et donc le râteau (7) le long de l'écran filtrant. La partie supérieure horizontale (8A) des dents (8) (voir la figure 8) remonte ainsi entre les barres (2) et entraîne avec elle les corps volumineux (40) (appelé déchets par la suite) retenus sur l'écran filtrant. En position « haute » du chariot (7) (figure 6), lorsque le râteau (7) se retrouve au-dessus du peigne de nettoyage (27), le motoréducteur (22) est stoppé.

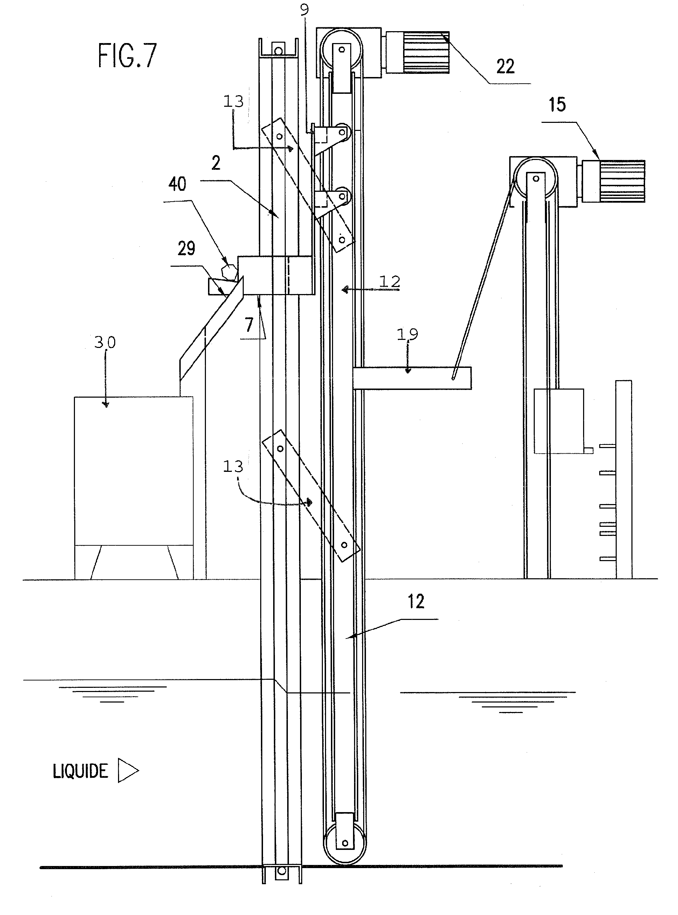

Ensuite, par l'intermédiaire du motoréducteur (15), le rail (12) est abaissé, et simultanément approché de l'écran filtrant, de par la rotation des bras (13) autour des axes d'articulation (14) solidarisés aux poteaux (6) (figure 7). Ce faisant, les dents (8) du râteau (7) avancent vers le côté amont de l'écran filtrant jusqu'à ce que la partie verticale (8B) desdites dents dépasse l'extrémité libre (29A) des dents (29) du peigne de nettoyage (27). Ainsi, les déchets (40), portés par l'angle défini par les parties (8A) et (8B) des dents (8), se retrouvent au-dessus des dents (29) du peigne de nettoyage (27) (figure 7).

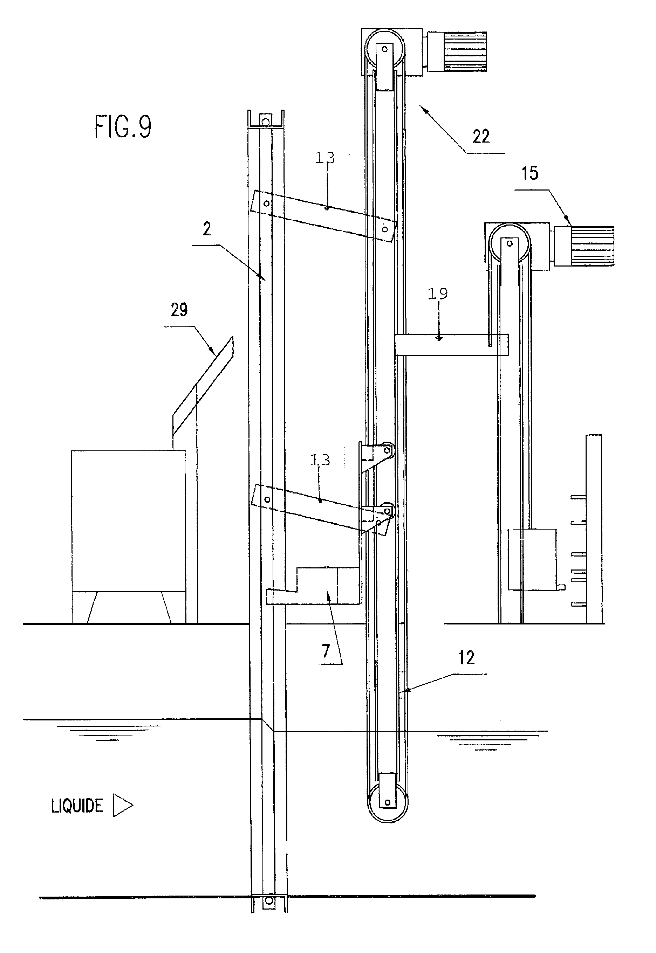

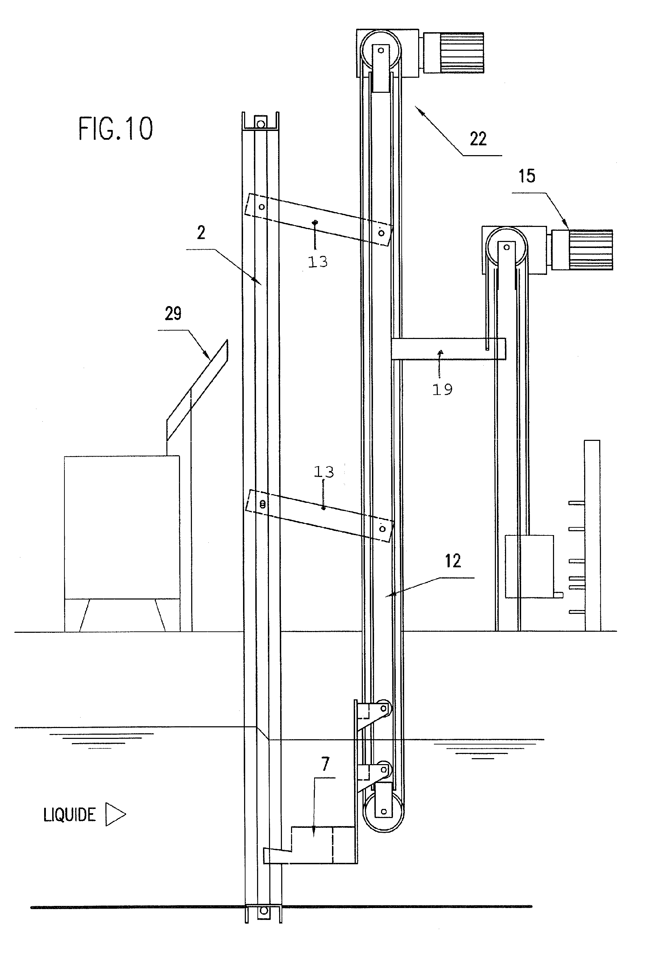

Le motoréducteur (15) s'arrête alors et le motoréducteur (22) se remet en marche dans le sens inverse pour faire descendre le râteau (7). Les dents (8) du râteau (7) se croisant avec les dents (29) du peigne (27), les déchets (40) sont déposés sur ledit peigne de nettoyage comme montré sur la figure 8. Une fois les déchets déposés sur le peigne de nettoyage, le rail (12) est soulevé par le biais du motoréducteur (15), toujours par le biais de la rotation des bras (13) par rapport aux axes d'articulation (14) solidarisés aux poteaux (6). L'amplitude de cette rotation est définie de telle sorte que l'extrémité (8C) des dents (8) se retrouve entre les barres (2) de l'écran filtrant comme montré sur la figure 9. Cette position du rail (12) est maintenue jusqu'à ce que le chariot (7) descende en position basse, comme illustré sur la figure 10. Cela permet d'éviter d'entraîner vers le bas (avec la partie inférieure (8D) des dents (8)) des déchets qui airaient pu s'arrêter sur l'écran filtrant entre temps. Le motéréducteur (22) est alors arrêté et, par l'intermédiaire du motoréducteur (15), le rail (12) est replacé dans la position de départ montrée sur la figure 5.

Comme montré sur les figures 5 à 10, la partie supérieure des dents (29) du peigne (27) est inclinée. Cela permet à la partie inférieure (8D) des dents (8) du râteau (7) de pousser vers une benne (30) de stockage, les déchets déposés sur le peigne de nettoyage lors du cycle précédent. Ainsi, en descendant entre les dents (29), le râteau (7) remplit deux fonctions : d'une part, il dépose sur le peigne (27) les déchets du cycle de nettoyage en cours, et d'autre part, il pousse vers la benne (30) les déchets déposés lors du cycle de nettoyage précédent.

Le dispositif selon l'invention peut être réalisé de plusieurs façons. Tout d'abord, l'écran filtrant peut être vertical ou incliné par rapport à l'horizontale.

Les barres (2) peuvent être reliées aux poutres (3) et (4) par tout autre moyen que celui décrit précédemment. Ainsi chaque barre peut être soudée sur la poutre ou être tendue par l'intermédiaire d'une tige filetée soudée sur la barre et un écrou.

Les barres de l'écran filtrant peuvent être tendues entre deux poutres reliées par des poteaux ou fixées indépendamment. Les barres (2) peuvent être réalisées en métal, en plastique ou en un autre matériau. Elles peuvent avoir une section rectangulaire, circulaire ou autre.

Le râteau (7) et le peigne de nettoyage (27) peuvent également être réalisés en métal, en plastique ou encore comporter différents éléments réalisés en matériaux différents.

Le dispositif selon l'invention peut être équipé non pas d'un seul rail (12), mais de plusieurs rails de guidage du chariot (9), notamment pour des dégrilleurs très larges. Aussi, le rail de guidage (12) du chariot (9) peut être remplacé par un autre mécanisme, qui n'est pas nécessairement situé derrière l'écran filtrant, côté aval par rapport au sens d'écoulement du liquide.

Le coulissement du râteau (7) entre les barres (2) de l'écran filtrant peut être assuré par un autre moyen qu'un motoréducteur (22) actionnant la chaîne (25). Ainsi il peut être réalisé par une ou plusieurs crémaillères, par une ou plusieurs tiges filetées ou encore par un autre moyen permettant d'obtenir la translation du râteau le long de l'écran filtrant.

Les mouvements du rail (12), et plus généralement l'avancement et le reculement du râteau (7) par rapport à l'écran filtrant, peuvent être réalisés par un autre moyen que le motoréducteur (15) et la chaîne (18). Cette fonction peut être remplie par un vérin, par une crémaillère, par une tige filetée ou encore par un autre mécanisme de guidage du rail permettant d'obtenir le parcours décrit du râteau (7). Ainsi, le rail de guidage peut rester immobile. Dans ce cas, le râteau (7) peut être fixé sur un autre mécanisme lui permettant de s'approcher ou de s'éloigner de l'écran filtrant.

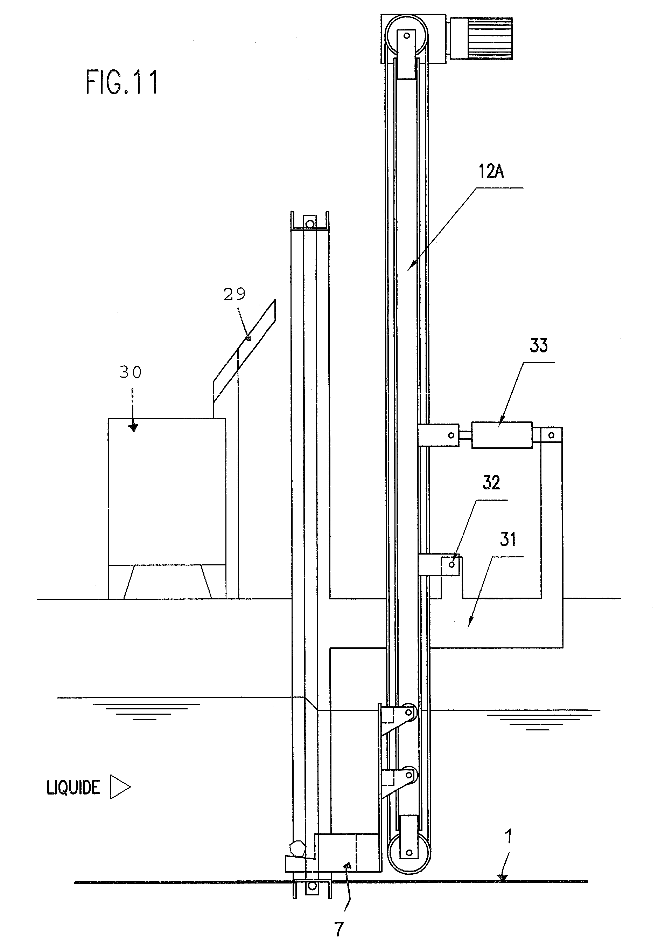

Aussi en position « arrêt », le râteau (7) peut rester en position intermédiaire entre le peigne de nettoyage et la surface du liquide. Ainsi, il descendra en bas de l'écran filtrant et reprendra la position montrée sur la figure 5 (respectivement sur la figure 11) seulement au moment du démarrage du nouveau cycle de nettoyage de l'écran filtrant.

Enfin, le guidage du râteau (7) lors du nettoyage de l'écran filtrant du dispositif selon l'invention peut être effectué non seulement par la détection de la position des différents éléments (détecteurs de proximité, comptage de tours,...) et par agissement indépendant sur les deux moyens d'animation mouvant le râteau (7) et le rail (12). Il est possible d'avoir un seul moteur combiné avec un dispositif mécanique de guidage permettant de s'affranchir du deuxième moyen d'animation.

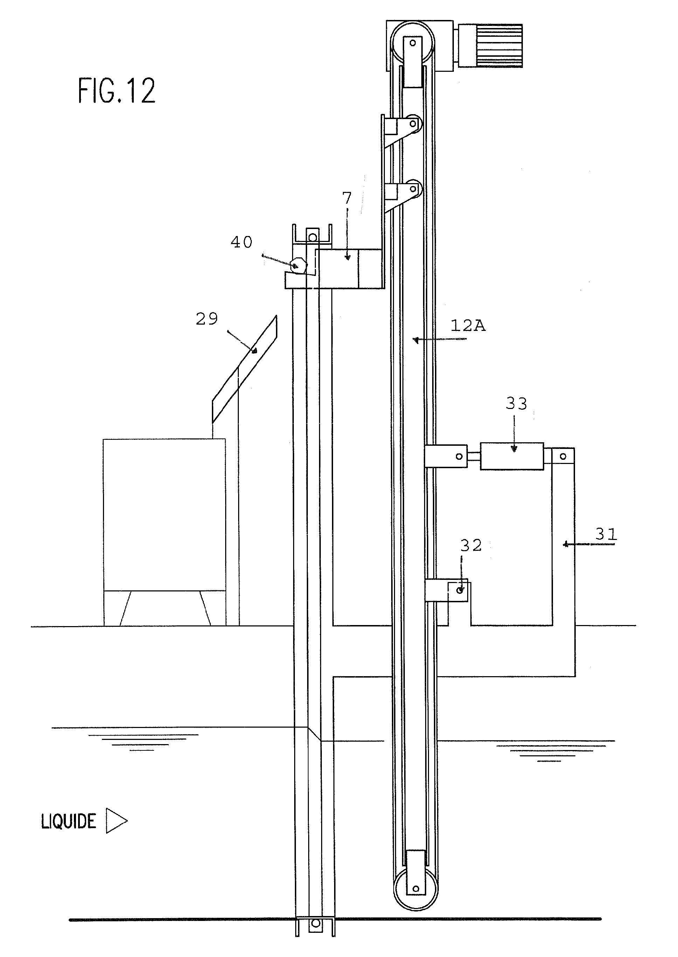

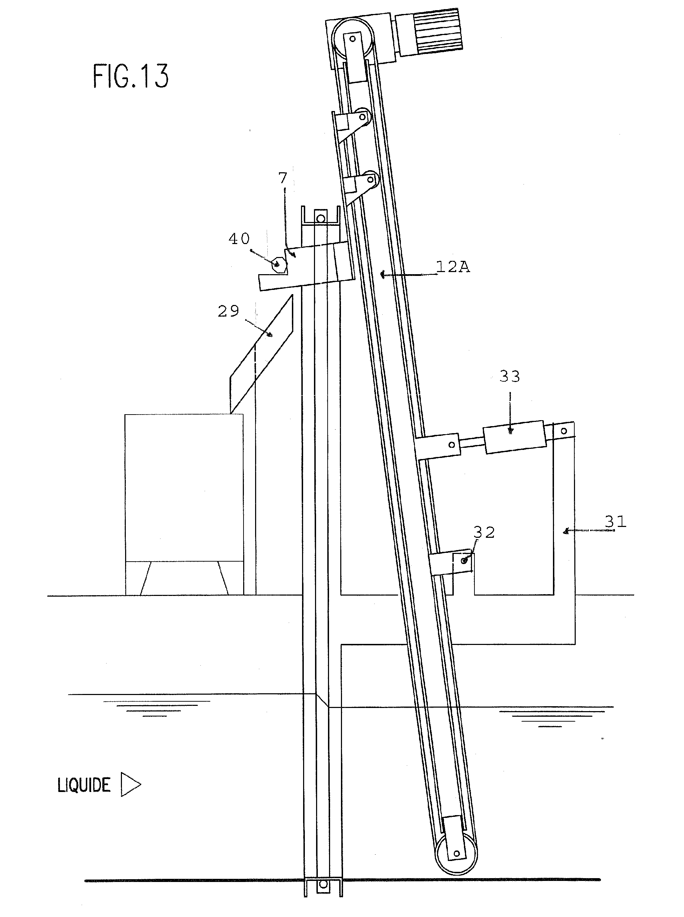

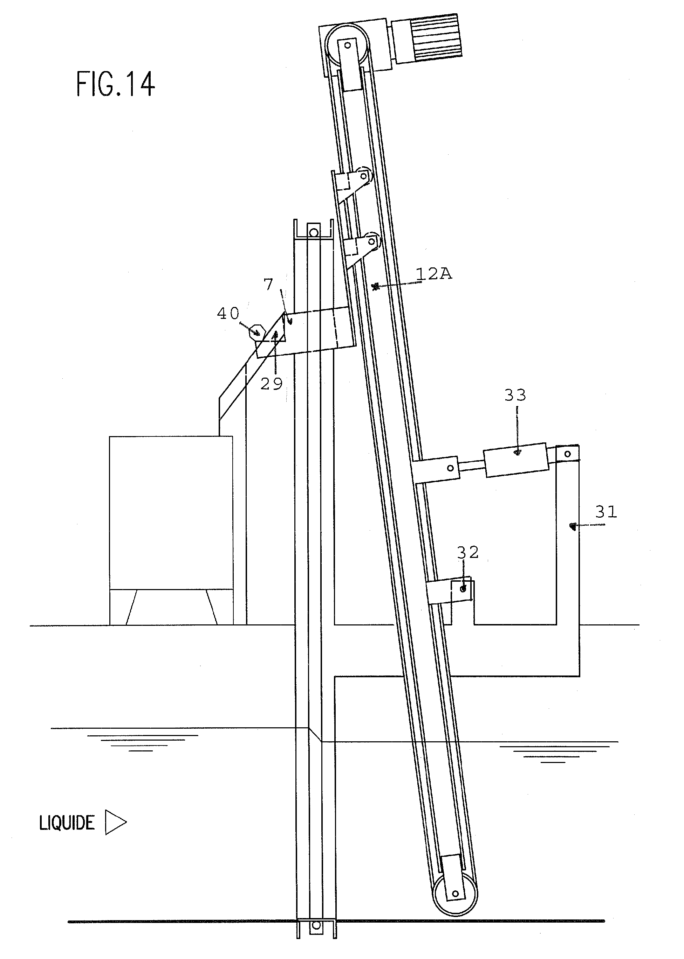

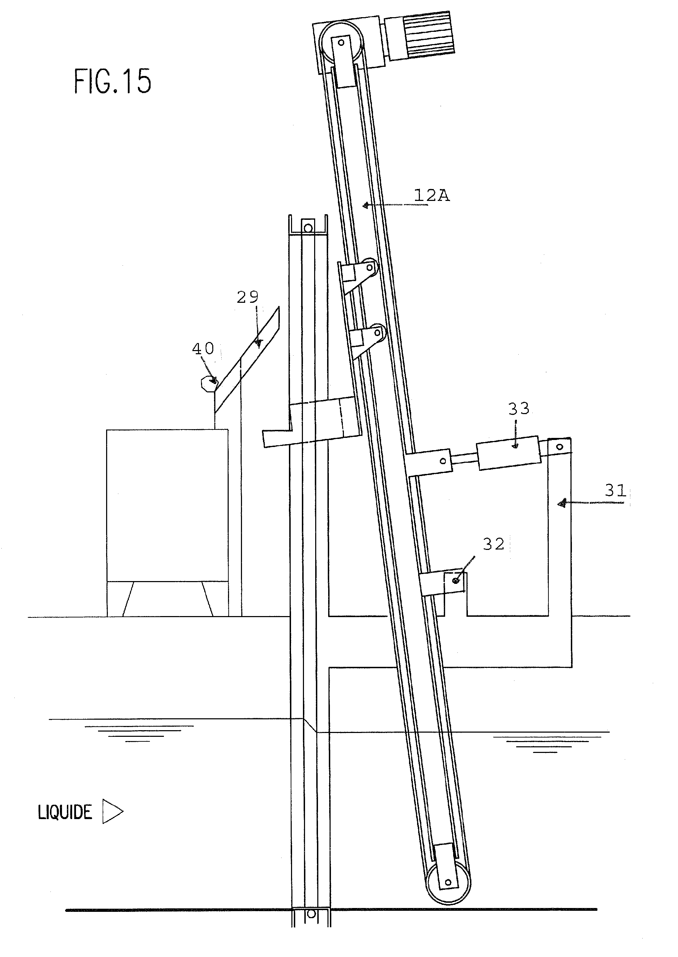

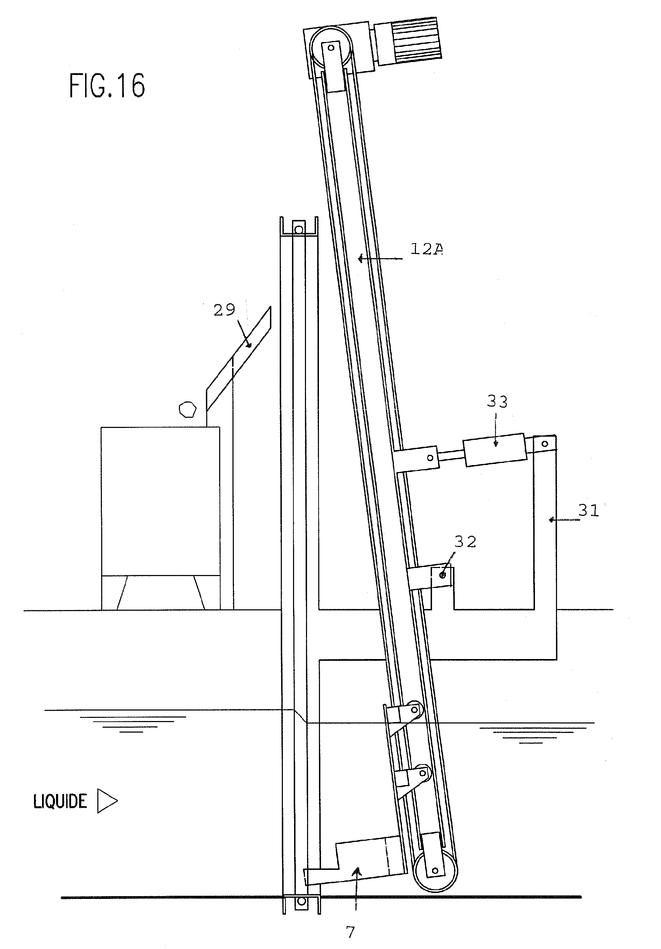

Une variante du dispositif selon l'invention est représentée sur les figures 11 à 16. Dans cette variante, le rail de guidage (12A) du chariot (9) n'est pas maintenu par les bras (13), mais repose sur un support fixe (31) (dans cet exemple ce support (31) est relié au cadre de l'écran filtrant, mais il est tout à fait possible que ledit support (31) soit fixé indépendamment sur les bords du canal).

Le rail (12A) est articulé sur le support (31) au moyen d'un axe d'articulation horizontal (32). Ce faisant, le rail (12A) ne reste pas parallèle à l'écran filtrant comme dans le cas décrit ci-dessus, mais est susceptible de pivoter autour de l'axe 32. Le rail (12A) est en outre solidarisé à un vérin (33), dont le point d'application est constitué par le support (31). Ce vérin (33) permet ainsi d'incliner le rail (12A) pour approcher ou éloigner le râteau (7)de l'écran filtrant, lorsque ledit râteau se trouve en partie basse ou en partie haute de l'écran filtrant.

Le parcours du râteau de nettoyage par rapport à l'écran filtrant reste globalement le même. Les différentes séquences du fonctionnement de cette variante du dispositif selon l'invention sont montrées sur les figures 11 à 16, qui reprennent les mêmes étapes que celles montrées sur les figures 5 à 10 respectivement.

Le principe de fonctionnement de cette variante du dispositif selon l'invention reste donc le même. Les déchets arrêtés par l'écran filtrant sont récupérés par le râteau, puis remontés au-dessus du canal (1), et déposés sur le peigne de nettoyage (7). Ensuite le râteau (7) reprend sa position initiale en bas de l'écran filtrant. Toutes ces fonctions sont effectuées sans que les dents (8) du râteau ne quittent les fentes de l'écran filtrant. Au contraire, le râteau de nettoyage est guidé naturellement par les barres (2) de l'écran filtrant tout le long de son parcours. Le seul réglage du dispositif consiste à disposer les dents (29) du peigne de nettoyage (27) juste en face des barres de l'écran filtrant, ce qui n'est pas difficile car les deux éléments sont fixes.

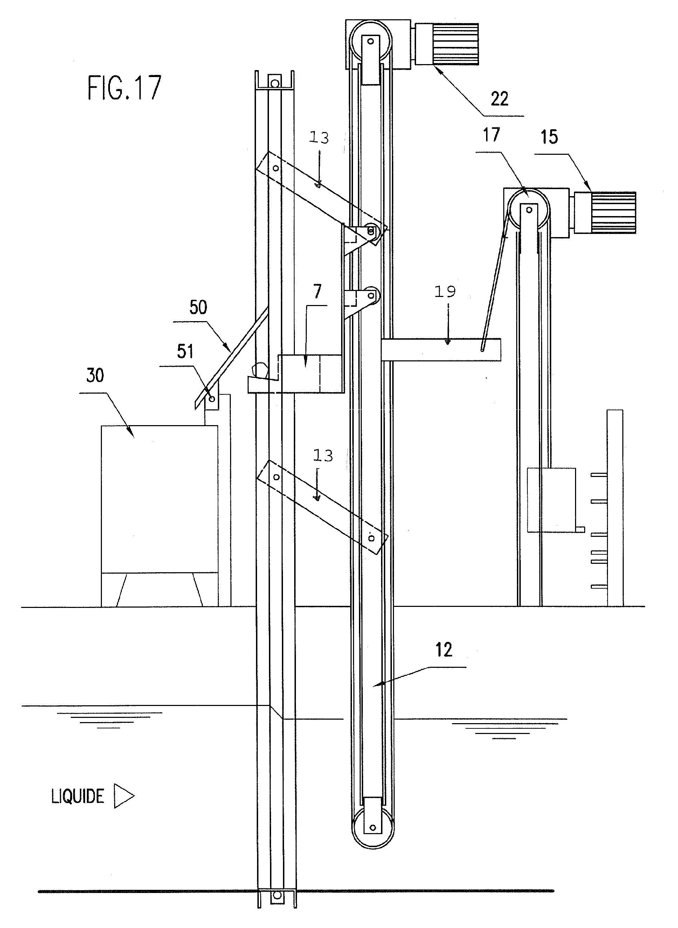

Une seconde variante du dispositif selon l'invention est montrée sur les figures 17 à 20. Dans cette variante, le peigne de nettoyage (27) est remplacé par une plaque pivotante (50), inclinée comme montré sur la figure 17. Cette plaque (50) est fixée au niveau de sa base sur le support (28) par l'intermédiaire d'un axe d'articulation (51), lui permettant ainsi de pivoter par rapport à celui-ci. La partie supérieure de la plaque pivotante (50) prend appui contre les barres (2) de l'écran filtrant, par simple gravité.

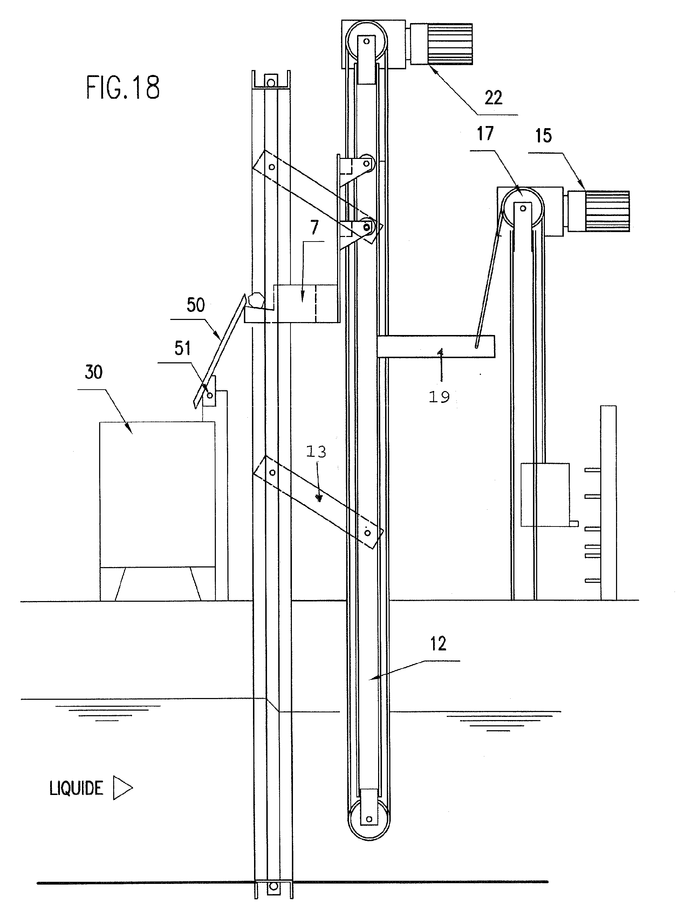

Ainsi, lorsque le râteau (7) est en course ascendante le long de l'écran filtrant, il vient prendre contact avec la partie inférieure de la plaque pivotante (50). En poursuivant son ascension, le râteau (7) soulève la plaque pivotante (50), comme montré sur la figure 18.

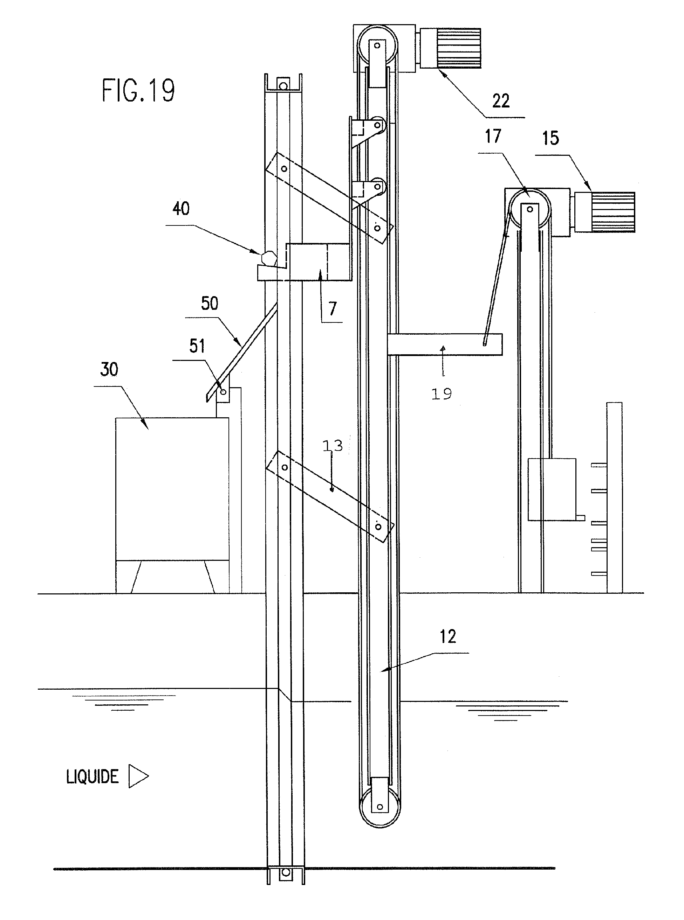

Quand la râteau (7) se retrouve au dessus de la plaque pivotante (50), celle-ci n'étant plus soumise à une quelconque contrainte, retombe par son poids dans sa position initiale, comme montré sur la figure 19.

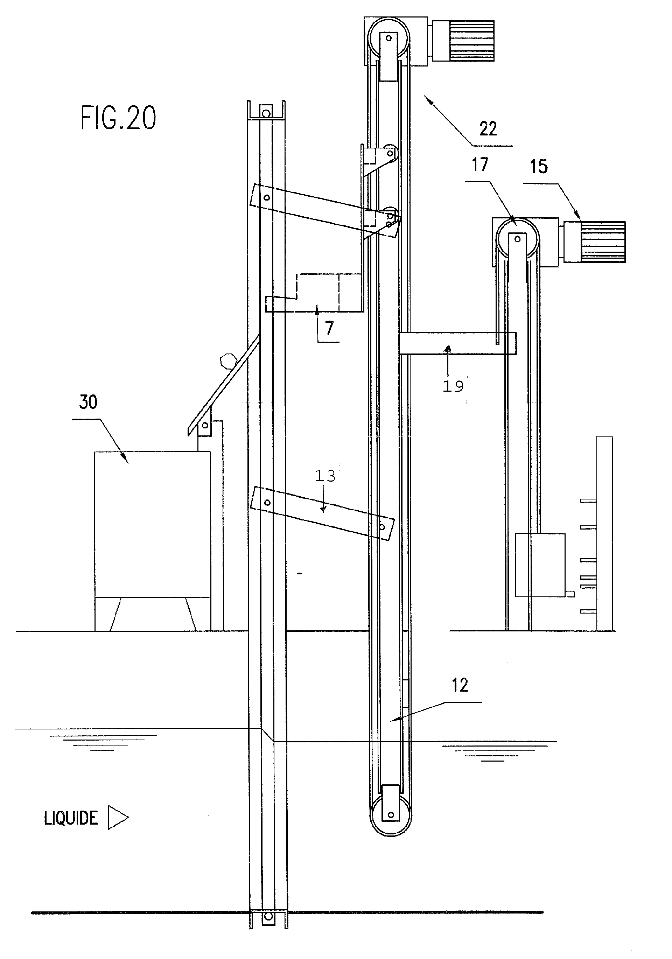

Ensuite le râteau (7) est éloigné de l'écran filtrant, de façon à ce que les dents (8) pénètrent entièrement entre les barres (2) dudit écran filtrant, comme montré sur la figure 20. N'étant plus portés par les dents (8), les déchets (40) tombent sur la plaque (50). Corollairement, le râteau (7) redescend dans sa position initiale en direction de l'extrémité inférieure de 1' écran filtrant, les dents (8) restant toujours à l'intérieur de l'écran filtrant pour ne pas accrocher la plaque pivotante (50) lors de cette course descendante.

Cette seconde variante du dispositif selon l'invention peut être réalisée de plusieurs façons. Ainsi, la plaque pivotante (50) peut être animée par un autre moyen indépendant du râteau (7). Au lieu de pivoter, elle peut également reculer ou, plus généralement, se déplacer d'une manière ou d'une autre pour remplir toujours la même fonction, c'est à dire laisser passer le râteau (7) lors de son ascension, et s'appuyer de nouveau contre l'écran filtrant lorsque le râteau est passé au dessus d'elle, et se positionner en retrait par rapport à l'écran filtrant pour libérer le déchets qui tombent sur ladite plaque.

A titre indicatif, les dimensions du dégrilleur décrit en liaison avec les figures 5 à 10 et respectivement 11 à 16 peuvent être dans l'ordre de grandeur suivant :
- largeur du canal (1) : 1 m
- profondeur du canal (1) : 1,5 m
- hauteur totale du dégrilleur : 3 m
- distance entre les barres (2) de l'écran filtrant : 5 mm

On conçoit dès lors tout l'intérêt du dispositif selon l'invention dans le cadre du tamisage / dégrillage des effluents liquides et des eaux résiduaires. En effet, outre une simplicité de construction, il peut être installé facilement dans un canal très profond et offre la possibilité de réduire considérablement la maille de filtration en s'affranchissant des problèmes d'ordre mécanique.

## Revendications

1. Dispositif de dégrillage / tamisage de liquide véhiculant des corps volumineux (40) au sein d'un canal (1), ***caractérisé* en ce qu'**il comporte :
- un écran filtrant composé d'au moins deux barres (2) tendues entre deux poutres (3, 4), lesdites barres étant disposées à une certaine distance l'une de l'autre, et s'étendant au-delà de la hauteur du canal ;
- un râteau (7) mobile le long de l'écran filtrant et situé derrière celui-ci, côté aval par rapport au sens d'écoulement du liquide au sein dudit canal, ledit râteau étant muni de dents (8), destinées à pénétrer entre les barres (2) de l'écran filtrant et orientées selon la direction opposée au sens d'écoulement du liquide ;
- au moins un rail de guidage (12), sur lequel le râteau de nettoyage (7) est susceptible de se déplacer ;
- des moyens de récupération des déchets, situé devant l'écran filtrant, côté amont par rapport au sens d'écoulement du liquide ;
- des moyens d'animation, permettant d'une part, d'assurer le déplacement du râteau (7) le long des barres (2) de l'écran filtrant, et d'autre part, de réaliser une variation de la position dudit râteau (7) par rapport à la surface de l'écran filtrant, de façon à ce que les dents (8) du râteau puissent pénétrer plus ou moins entre les barres (2) de l'écran filtrant.

2. Dispositif de dégrillage / tamisage de liquide selon la revendication 1, ***caractérisé* en ce que** les moyens de récupération des déchets sont constitués par un peigne de nettoyage (27), situé devant l'écran filtrant, côté amont par rapport au sens d'écoulement du liquide, muni de dents (29) disposées en face des barres (2) de l'écran filtrant et orientées selon le sens d'écoulement du liquide, chacune des dents (8) dudit râteau (7) étant susceptibles de pénétrer dans l'espace défini entre les dents (29) dudit peigne (27).

3. Dispositif de dégrillage / tamisage de liquide selon la revendication 1, ***caractérisé* en ce que** les moyens de récupération des déchets sont constitués par une plaque pivotante (50), articulée à sa base par rapport à un axe (51), et dont la partie supérieure prend appui contre l'écran filtrant, ladite plaque (50) étant susceptible de pivoter autour de l'axe (51) lorsque elle est poussée par le râteau (7) lors de la remontée de celui-ci le long de l'écran filtrant avec les dents (8) sorties devant ledit écran filtrant coté amont par rapport au sens d'écoulement du liquide.

4. Dispositif de dégrillage / tamisage de liquide selon l'une des revendications 1 à 3, ***caractérisé* en ce que** le déplacement du râteau (7) le long des barres (2) de l'écran filtrant est effectué sur au moins un rail de guidage (12), ledit rail étant équipé de moyens de guidage et d'animation lui permettant de rester parallèle à l'écran filtrant tout en s'approchant ou s'éloignant dudit écran de façon à ce que les dents (8) dudit râteau pénètrent plus ou moins entre les barres (2).

5. Dispositif de dégrillage / tamisage de liquide selon l'une des revendications 1 à 3, ***caractérisé* en ce que** le déplacement du râteau (7) le long des barres (2) de l'écran filtrant est effectué sur au moins un rail de guidage (12), ledit rail étant équipé de moyens de support (31) et d'animation (33), et étant susceptible de pivoter autour d'un axe (32) afin de permettre aux extrémités dudit rail (12) de s'approcher ou de s'éloigner de l'écran filtrant et, par conséquent, de permettre le rapprochement ou l'éloignement du râteau (7) dudit écran de façon à ce que les dents (8) dudit râteau pénètrent plus ou moins entre les barres (2).

6. Dispositif de dégrillage / tamisage de liquide selon l'une des revendications 1 à 5, ***caractérisé* en ce que** l'écran filtrant est orienté verticalement.

7. Dispositif de dégrillage / tamisage de liquide selon l'une des revendications 1 à 5, ***caractérisé* en ce que** l'écran filtrant est incliné par rapport à l'horizontale.

8. Dispositif de dégrillage / tamisage de liquide selon l'une des revendications 1 à 7, ***caractérisé* en ce que** les barres (2) de l'écran filtrant présentent une section rectangulaire ou circulaire.

9. Dispositif de dégrillage / tamisage de liquide selon l'une des revendications 1 à 8, ***caractérisé* en ce qu'**il comporte un seul moyen d'animation faisant coulisser le râteau (7) le long des barres (2), ledit moyen étant combiné avec un dispositif mécanique permettant aussi, en fonction de la position du râteau, de rapprocher ou d'éloigner ledit râteau de l'écran filtrant de façon à ce que les dents (8) dudit râteau pénètrent plus ou moins entre les barres (2).

10. Procédé de dégrillage et de tamisage d'un liquide véhiculant des corps volumineux (40) circulant au sein d'un canal (1), ***caractérisé*:**
• **en ce qu'**il consiste à positionner au sein dudit canal un dispositif de dégrillage / tamisage intégrant un écran filtrant orienté sensiblement perpendiculairement par rapport au sens d'écoulement dudit liquide au sein dudit canal, ledit dispositif comprenant :
- un écran filtrant composé d'au moins deux barres (2) disposées à une certaine distance l'une de l'autre, et s'étendant au-delà de la hauteur du canal ;
- un râteau (7) mobile le long de l'écran filtrant et situé derrière celui-ci, côté aval par rapport au sens d'écoulement du liquide au sein dudit canal, ledit râteau étant muni de dents (8) destinées à pénétrer entre les barres (2) de l'écran filtrant ;
- au moins un rail de guidage (12), sur lequel le râteau de nettoyage (7) est susceptible de se déplacer ;
- un peigne de nettoyage (27), situé devant l'écran filtrant, côté amont par rapport au sens d'écoulement du liquide, les dents (29) dudit peigne étant disposées en face des barres (2) de l'écran filtrant et orientées en direction du sens d'écoulement du liquide, chacune des dents (8) dudit râteau étant susceptibles de pénétrer dans l'espace défini entre les dents (29) dudit peigne (27) ;
- des moyens d'animation permettant d'une part d'assurer le déplacement du râteau (7) le long des barres (2) de l'écran filtrant, et d'autre part, de réaliser une variation de la position dudit râteau (7) par rapport à la surface de l'écran filtrant de façon à ce que les dents (8) du râteau puissent pénétrer plus ou moins entre les barres (2) de l'écran filtrant ;
• et en ce qu'il consiste :
- lors du nettoyage de l'écran filtrant, à faire coulisser le râteau (7) le long des barres (2) du bas vers le haut, les dents (8) dudit râteau dépassant la surface dudit écran du côté amont par rapport au sens d'écoulement du liquide à une distance suffisante pour permettre de retenir et entraîner les corps volumineux (40) retenus sur l' écran ;
- puis, lorsque ledit râteau est arrivé au maximum de sa course ascendante, se retrouvant ainsi au-dessus du peigne (27), à avancer le râteau en direction dudit peigne (27) et ensuite à redescendre le râteau de façon à ce que les dents (8) du râteau (7) pénètrent entre les dents (29) dudit peigne (27), les corps volumineux (40) étant transférés du râteau (7) sur le peigne (27);
- après le dépôt des corps volumineux sur le peigne (27) et lors de sa descente vers le bas de l'écran filtrant, à positionner le râteau (7) en retrait par rapport à la surface amont dudit écran, de façon à ce que l'extrémité (8C) des dents (8) se retrouve entre les barres (2) de l'écran.

11. Procédé de dégrillage et de tamisage d'un liquide véhiculant des corps volumineux (40) circulant au sein d'un canal, ***caractérisé* :**
• **en ce qu'**il consiste à positionner au sein dudit canal un dispositif de dégrillage / tamisage intégrant un écran filtrant orienté sensiblement perpendiculairement au sens d'écoulement dudit liquide au sein canal (1), ledit dispositif comprenant :
- un écran filtrant composé d'au moins deux barres (2) disposées à une certaine distance l'une de l'autre, et s'étendant au-delà de la hauteur du canal ;
- un râteau (7) mobile le long de l'écran filtrant, situé derrière celui-ci, côté aval par rapport au sens d'écoulement du liquide au sein du canal, ledit râteau étant muni de dents (8) destinées à pénétrer entre les barres (2) de l'écran filtrant ;
- au moins un rail de guidage (12), sur lequel le râteau de nettoyage (7) est susceptible de se déplacer ;
- une plaque pivotante (50), dont la partie supérieure prend appui contre l'écran filtrant, ladite plaque (50) étant susceptible de se déplacer lorsque elle est poussée par le râteau (7) ou par l'intermédiaire d'un autre moyen, de façon à laisser passer ledit râteau lors de la remontée de celui-ci le long de l'écran filtrant avec les dents (8) sorties devant ledit écran filtrant coté amont par rapport au sens d'écoulement du liquide ;
- des moyens d'animation permettant d'une part d'assurer le déplacement du râteau (7) le long des barres (2) de l'écran filtrant, et d'autre part, de réaliser une variation de la position dudit râteau (7) par rapport à la surface de l'écran filtrant de façon à ce que les dents (8) du râteau puissent pénétrer plus ou moins entre les barres (2) de l'écran filtrant ;
• et en ce qu'il consiste :
- lors du nettoyage de l'écran filtrant, à faire coulisser le râteau (7) le long des barres (2) du bas vers le haut, les dents (8) du râteau dépassant la surface dudit écran du côté amont par rapport au sens d'écoulement du liquide à une distance suffisante pour permettre de retenir et entraîner les corps volumineux retenus sur l' écran ;
- puis, lorsque ledit râteau est arrivé au niveau de la plaque pivotante (50), à faire pivoter ou à faire déplacer cette dernière, de façon à laisser passer le râteau (7), jusqu'à ce que ledit râteau se retrouve au dessus de ladite plaque ;
- à re-positionner la plaque pivotante (50) dans sa position initiale, c'est à dire en appui contre l'écran filtrant en partie supérieure ;
- puis lorsque le râteau (7) est au dessus de la plaque pivotantes (50) et que cette dernière se retrouve à nouveau en appui contre l'écran filtrant, à positionner le râteau (7) en retrait par rapport à la surface amont dudit écran, de façon à ce que l'extrémité (8C) des dents (8) se retrouve entre les barres (2) de l'écran ;
- et enfin, à faire descendre ledit râteau (7) vers le bas de l'écran filtrant, les dents (8C) restant toujours entre les barres (2).
